# EUROPEAN PATENT SPECIFICATION

(11) **EP 2 949 559 B1**
(45) Date of publication and mention of the grant of the patent: **24.08.2016**
(21) Application number: 14195234.1
(22) Date of filing: 27.11.2014
(51) Int. Cl.: B62J 35/00, B62K 11/04, B62K 19/24

(54) **Straddle-type vehicle**
Fahrzeug mit Sattel
Véhicule de type à enfourcher

(30) Priority: 30.05.2014 JP 2014112940
(43) Date of publication of application: 02.12.2015
(73) Proprietor: Yamaha Hatsudoki Kabushiki Kaisha, Iwata-shi, Shizuoka-ken 438 (JP)
(72) Inventor: Mitsuoka, Ryuuta, Shizuoka-ken, 4388501 (JP)
(74) Representative: Moreland, David

(56) References cited:
- EP-A2- 1 612 133
- JP-A- 2005 343 356
- JP-A- 2007 055 297
- JP-A- 2007 062 618
- JP-A- 2007 145 131
- JP-A- 2009 190 454
- US-A1- 2004 079 337
- US-A1- 2006 219 201
- US-A1- 2006 219 463
- US-A1- 2011 073 398

## Description

### FIELD OF INVENTION

The present invention relates to a straddle-type vehicle. The invention particularly but not exclusively relates to a saddle-straddling type motor vehicle having a frame.

### BACKGROUND TO INVENTION

There is a known saddle-straddling type motor vehicle that can acquire a supercharging effect by leading air flowing from the front during travel to an engine through an air cleaner. For example, in a motorcycle described in JP 2010-59923 A (YAMAHA MOTOR CO LTD), the air cleaner is arranged between a pair of main frames behind a head pipe as viewed from above a vehicle. A throttle body is arranged below the air cleaner between the pair of main frames. Further, a fuel tank is arranged behind the air cleaner.

In the motorcycle described in JP 2010-59923 A, air entering an air introducing duct during the travelling of the vehicle is led to the throttle body through the air cleaner. Thus, high power output is acquired due to the supercharging effect.

In a motorcycle, e.g. a sports-type motorcycle, high rigidity of a body frame is sometimes required with regard to power input from a front wheel in order to improve ridability or drivability. In this case, when the thickness of the pair of main frames is increased in order to more sufficiently increase the rigidity of the body frame, the weight of the body frame is increased.

US20110073398, on which the preamble of claim 1 is based, describes a saddle-riding type vehicle in which the capacity of an air cleaner can be increased whilst the bending stiffness of the vehicle body frame is enhanced. The vehicle body frame structure includes a head pipe, a pair of left and right main frames that extend rearwardly from a head pipe, an engine disposed downwardly of the left and right main frames and a fuel tank disposed upwardly of the engine and between the left and right main frames. The vehicle body frame structure also includes a pair of rivet plates that are connected to, and extend downwardly from, rear end portions of the main frames. A pair of left and right engine hangers extend downwardly from front portions of the left and right main frames and support the engine. The engine comprises a crankcase, a cylinder block, a cylinder head and a cylinder head cover. The cylinder block is disposed at a forward upper end portion of the crankcase. The vehicle body frame structure further includes a cross member that connects the left and right engine hangers in a vehicle width direction.

An object of at least one embodiment of at least one aspect of the present invention is to provide a straddle-type vehicle, such as a saddle-straddling type motor vehicle, e.g. a motorcycle, that can provide improved rigidity of a body frame while an increase in weight is minimised or inhibited.

### SUMMARY OF INVENTION

Various aspects of the present invention are defined in the independent claims. Some preferred features are defined in the dependent claims.

According to one aspect of the present invention, a straddle-type vehicle or a saddle-straddling type motor vehicle includes;
a head pipe,
a pair of left and right first body frames that extends rearward from the head pipe,
a pair of left and right second body frames that extends downward from rear ends of the pair of left and right first body frames,
an engine comprising or including a cylinder unit and a crank unit provided at a lower portion of the cylinder unit, and supported by the pair of left and right first body frames and the pair of left and right second body frames such that at least part of the crank unit is located at a position further rearward than the cylinder unit,
an air cleaner supported by the pair of left and right first body frames such that at least part of the air cleaner is positioned between the pair of left and right first body frames above the cylinder unit,
a throttle body unit arranged between the pair of left and right first body frames to connect the air cleaner to the cylinder unit,
a fuel tank supported by the pair of left and right first body frames behind the air cleaner such that at least part of the fuel tank is positioned between the pair of left and right first body frames above the crank unit, and
a first coupling member that overlaps with the pair of left and right first body frames in a side view of the vehicle; characterized in that:
the first coupling member extends in a vehicle width direction above the throttle body unit and between the air cleaner and the fuel tank to overlap with the throttle body unit in a plan view of the vehicle, and
both ends of the first coupling members are supported to be attachable to and detachable from the pair of left and right first body frames, respectively.

In the straddle-type vehicle or saddle-straddling type motor vehicle, the air cleaner and the fuel tank may be arranged rearward in this order between the pair of left and right first body frames. Further, the pair of left and right first body frames may be coupled by the first coupling member that may extend in the vehicle width direction between the air cleaner and the fuel tank. In this case, it may be possible to improve rigidity of the pair of left and right first body frames without increasing the thickness of the pair of right and left first body frames as compared to a case in which the first coupling member is not present between the head pipe and the rear ends of the pair of left and right first body frames.

Further, because the above-mentioned configuration may cause the first coupling member to be positioned between the air cleaner and the fuel tank, a gap between the air cleaner and the fuel tank may be effectively utilized. Therefore, the air cleaner, the throttle body unit, the fuel tank and the first coupling member may be efficiently arranged between the pair of left and right first body frames. As a result, the rigidity of the pair of left and right first body frames can be improved while the size of the vehicle may not increase and an increase in weight may be minimised or substantially inhibited.

Further, both ends of the first coupling member may be configured to be attachable to and detachable from the pair of left and right first body frames at a position above the throttle body unit. In this case, the first coupling member may be removed from the pair of left and right first body frames at the time of the maintenance of the throttle body unit. Thus, maintenance may be inhibited from becoming complicated.

The straddle-type vehicle or saddle-straddling type motor vehicle may further include a pair of fuel tank brackets that may support the fuel tank at the pair of left and right first body frames.

The first coupling member may be supported to be attachable to and detachable from the pair of fuel tank brackets.

In this manner, the pair of fuel tank brackets for supporting the fuel tank at the pair of left and right first body frames may be used as members for attaching the first coupling member to the pair of left and right first body frames. Therefore, an increase in number of the components is minimised or substantially inhibited.

The fuel tank may have a front surface.

At least part of the front surface of the fuel tank may include a first inclined surface that may be inclined forward and upward. The first inclined surface may be arranged behind the first coupling member.

In this case, a gap through which the first coupling member passes can be formed between the air cleaner and the fuel tank while at least part of the air cleaner and at least part of the front surface of the fuel tank may be in a close proximity to each other. Thus, the air cleaner, the fuel tank and the first coupling member can be compactly arranged between the pair of left and right first body frames.

The air cleaner may have a back surface.

At least part of the back surface of the air cleaner may include a second inclined surface that may be inclined rearward and upward.

The second inclined surface may be arranged in front of the first coupling member.

In this case, a gap through which the first coupling member passes can be formed between the air cleaner and the fuel tank while at least part of the back surface of the air cleaner and at least part of fuel tank are in a close proximity to each other. Thus, the air cleaner, the fuel tank and the first coupling member can be compactly arranged between the pair of left and right first body frames.

The straddle-ride vehicle or saddle-straddling type motor vehicle may further include a second coupling member that may extend in the vehicle width direction to connect upper portions of the pair of left and right second body frames to each other.

A third coupling member may extend in the vehicle width direction to connect lower portions of the pair of left and right second body frames to each other.

In this case, the rigidity of the pair of left and right second body frames may be improved. Thus, the engine may be more stably supported by the pair of left and right first body frames and the pair of left and right second body frames.

A distance between the pair of first body frames in a width direction (W) may increase rearward from the head pipe. The distance may be a maximum at a position (MP) in the front-and-rear direction (L). The distance between the pair of first body frames in the width direction may decrease from said position (MP).

The first coupling member may be provided rearward of said position (MP) to connect opposing portions of the pair of first body frames.

The first coupling member may be elongate and/or metallic and/or hollow and/or tubular and/or may have a cross-section selected from one of: circular, elliptical, rectangular, flat, L-shaped or T-shaped.

A gap through which the first coupling member may pass or passes may be formed between the fuel tank and the air cleaner. A/the first surface of the fuel tank and a/the back surface of the air cleaner may be proximal to one another.

### BRIEF DESCRIPTION OF DRAWINGS

An embodiment of the present invention will now be described by way of example only, and with reference to the accompanying drawings, which are:
- Figure 1: a side view of one side of a motorcycle according to one embodiment of the present invention;
- Figure 2: a view showing a body frame of Figure 1 as viewed obliquely forward from a position further rearward and upward than a vehicle;
- Figure 3: an end view of a cut portion when a center portion of the motorcycle in a width direction is cut by a plane parallel to an up-and-down direction and a front-and-rear direction;
- Figure 4: a diagram showing an attaching step of a first coupling member, an air cleaner and a fuel tank to a pair of first body frames;
- Figure 5: a diagram showing an attaching step of the first coupling member, the air cleaner and the fuel tank to the pair of first body frames;
- Figure 6: a diagram showing an attaching step of the first coupling member, the air cleaner and the fuel tank to the pair of first body frames;
- Figures 7A to 7C: a front view, a side view and a cross sectional view, respectively, of a tank bracket;
- Figure 8: an enlarged perspective view of the tank bracket of Figure 4; and
- Figures 9A to 9C: diagrams showing another example of the configuration of the tank bracket.

### DETAILED DESCRIPTION OF DRAWINGS

A straddle-type vehicle or saddle-straddling type motor vehicle according to an embodiment of the present invention will be described below with reference to drawings. In the following description, a motorcycle will be described as one example of the straddle-type vehicle or saddle-straddling type motor vehicle.

### (1) Schematic Configuration of Motorcycle

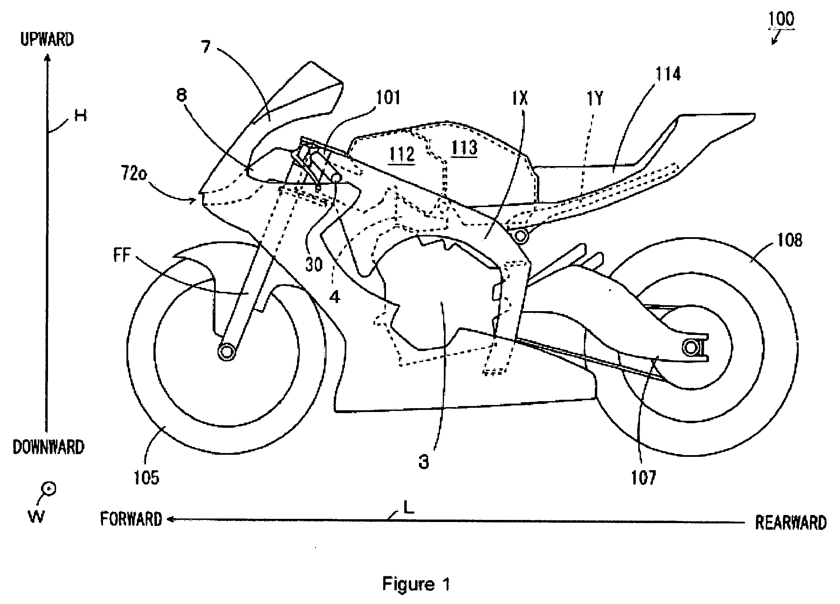

Figure 1 is a side view of one side of a motorcycle 100 according to an embodiment of the present invention. Figure 1 shows the motorcycle 100 standing up to be perpendicular with the road surface. In Figure 1 and each of subsequent given diagrams, a front-and-rear direction L, a width direction W and an up-and-down direction H of the motorcycle 100 are indicated by arrows accordingly. In the following description, a direction in which the arrow is directed in the front-and-rear direction L is referred to as forward, and an opposite direction is referred to as rearward. Further, a direction in which the arrow is directed in the width direction W is referred to as leftward, and an opposite direction is referred to as rightward. Further, a direction in which the arrow is directed in the up-and-down direction H is referred to as upward, and an opposite direction is referred to as downward.

As shown in Figure 1, the motorcycle 100 includes a head pipe 101, a body frame 1X and a seat frame 1Y. The body frame 1X extends in an obliquely downward rearward direction from the head pipe 101. The rear end of the body frame 1X is curved downward. The seat frame 1Y extends rearward from an upper portion of a rear end of the body frame 1X. Details of the body frame 1X will be described below.

A duct 8 is provided in front of the head pipe 101. A front fork FF is provided at the head pipe 101 to be swingable to the right and the left. A pair of right and left handles 30 is provided at the upper end of the front fork FF. A front wheel 105 is rotatably supported at the lower end of the front fork FF.

An engine 3 is provided at a lower portion of the body frame 1X. The engine 3 is supported by the body frame 1X. A throttle body unit 4 is attached to the engine 3. An air cleaner 112 is supported at a position above the engine 3 by the body frame 1X. A fuel tank 113 is supported behind the air cleaner 112 by the body frame 1X. Details of a positional relation among the engine 3, the throttle body unit 4, the air cleaner 112 and the fuel tank 113 will be described below.

A seat 114 is supported behind the fuel tank 113 by the seat frame 1Y. A rear arm 107 is provided to extend rearward from the lower end of the body frame 1X. A rear wheel 108 is rotatably supported at the rear end of the rear arm 107.

A body cover 7 is provided to cover the head pipe 101 from the front and to cover part of the front fork FF from both sides. An intake opening 72o is formed at a portion of the body cover 7 positioned in front of the head pipe 101. When the motorcycle 100 is viewed from the front, the intake opening 72o is positioned at the center of the motorcycle 100 in the width direction W.

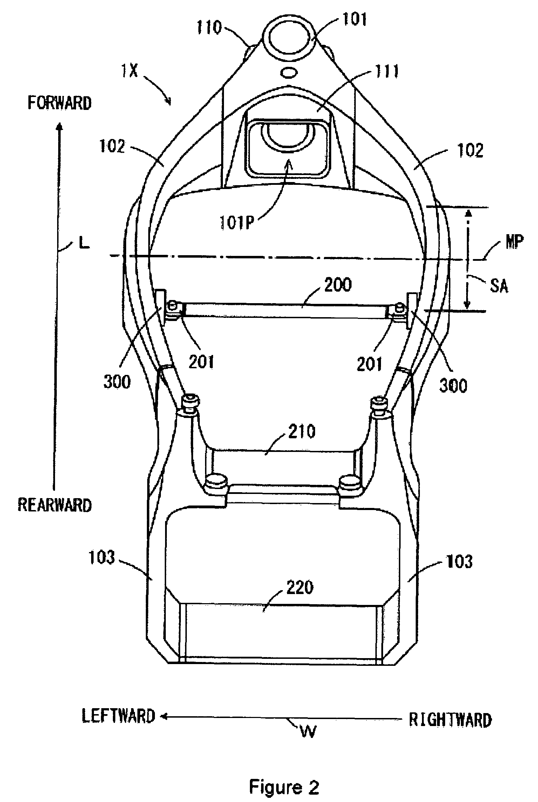

A tip end of the duct 8 is connected to the intake opening 72o of the body cover 7 from behind. During the travelling of the motorcycle 100, air flowing into the duct 8 through the intake opening 72o is led to the engine 3 through an intake passage 101P (Figure 2), described below, the air cleaner 112 and the throttle body unit 4. Thus, supercharging effect is acquired, so that high power output is generated.

### (2) Configuration of Body Frame

Figure 2 is an a view of the body frame 1X of Figure 1 as viewed obliquely forward from a position further rearward and upward than the vehicle. As shown in Figure 2, a square tube-shaped intake guide 110 is provided or attached to a front of the head pipe 101. The intake guide 110 is provided so as to open forward and rearward. Further, an intake guide 111 is provided or attached to the back of the head pipe 101 so as to be connected to the intake guide 110. An intake passage 101 P leading air rearward is formed by the intake guides 110, 111.

A rear end of the duct 8 of Figure 1 is connected to the intake guide 110. Further, an inlet port of the air cleaner 112 of Figure 1 is connected to the intake guide 111. Thus, air flowing into the duct 8 is smoothly led to the air cleaner 112 through the intake passage 101P.

The body frame 1X of the present example includes a pair of left and right (hereinafter) right and left first body frames 102 and a pair of left and right (hereinafter right and left) second body frames 103. The pair of first body frames 102 is curved rearward from the head pipe 101 to spread outward in the width direction W and is further curved inward in a plan view of the vehicle.

Thus, a distance between the pair of first body frames 102 in the width direction W increases rearward from the head pipe 101, and the distance is maximum at a position MP in the front-and-rear direction L. In Figure 2, the position MP is indicated by a dot and dashed line. Further, the distance between the pair of first body frames 102 in the width direction W decreases rearward from the position MP.

In the present embodiment, a first coupling member 200 is provided to connect opposing portions of the pair of first body frames 102 within a constant range SA centered at the position MP in the front-and-rear direction L. Thus, rigidity of the pair of first body frames 102 is improved.

The first coupling member 200 is a metallic cylindrical member having a circular cross-section. Couplers 201 are attached to both ends of the first coupling member 200. In the motorcycle 100 of the present example, a pair of tank brackets 300 is used to support the fuel tank 113 (shown in Figure 1) at the pair of first body frames 102. The couplers 201 are configured to be attachable to and detachable (detachably attachable) from the pair of right and left first body frames 102 via the tank brackets 300. Details of the tank brackets 300 will be described below.

The pair of second body frames 103 is connected to the rear ends of the pair of first body frames 102 by welding, and extend downward from rear ends of the pair of first body frames 102.

In the present embodiment, a second coupling member 210 is provided to connect portions in the vicinity of the upper ends of the pair of second body frames 103 to each other, and a third coupling member 220 is provided to connect portions in the vicinity of the lower ends of the pair of second body frames 103 to each other.

The second and third coupling members 210, 220 are metallic strip-shaped members, and are connected to the pair of second body frames 103 by welding to extend in the width direction W. Thus, rigidity of the pair of second body frames 103 is improved.

As described above, the pair of first body frames 102 is coupled to each other by the first coupling member 200, and the pair of second body frames 103 is coupled to each other by the second and third coupling members 210, 220, whereby rigidity of the body frame 1X is improved. Thus, the engine 3, the air cleaner 112 and the fuel tank 113 are stably supported by the body frame 1X.

The rigidity of the pair of right and left first body frames 102 increases as the position of the first coupling member 200 in the front-and-rear direction becomes closer to the position MP. The range SA is set small such that the position of the first coupling member 200 in the front-and-rear direction L becomes closer to the position MP. The length of the range SA is preferably set to about 30 cm, for example, in order to acquire higher rigidity.

### (3) Positional Relation among Plurality of Constituent Elements Supported by Body Frames

Details of the positional relation between the engine 3, the throttle body unit 4, the pair of first body frames 102, the air cleaner 112, the fuel tank 113 and the first coupling member 200 will be described.

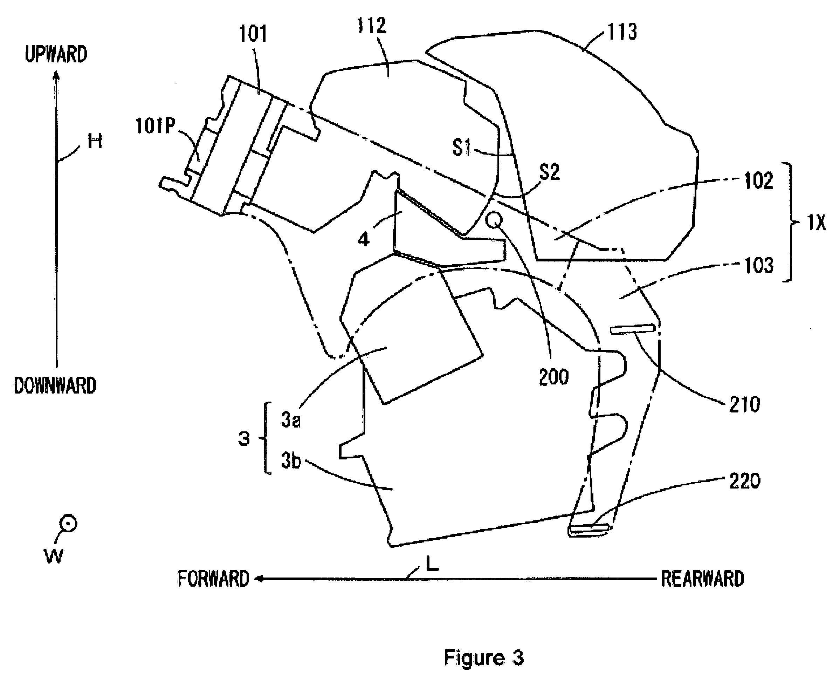

Figure 3 is an end view of a cut portion when the center portion of the motorcycle 100 in the width direction W is cut by a plane parallel to the up-and-down direction H and the front-and-rear direction L. The end view of the cut portion of Figure 3 mainly shows contours of a plurality of constituent elements supported by the body frame 1X. Further, in Figure 3, the one first body frame 102 and the one second body frame 103 are indicated by the dot and dashed lines.

As shown in Figure 3, the engine 3 of the present example includes a cylinder unit 3a and a crank unit 3b. The cylinder unit 3a includes a cylinder head and a cylinder body, and is arranged such that an axial center of a cylinder is inclined downward and rearward. The crank unit 3b of the present example includes a crank, a starter motor, a generator and a deceleration mechanism, and is provided at a lower portion of the cylinder unit 3a. Part of the crank unit 3b is located at a position further rearward than the cylinder unit 3a.

An intake port is formed in the vicinity of the upper end of the cylinder unit 3a. The upper end of the cylinder unit 3a is positioned between the pair of first body frames 102. A throttle body unit 4 is connected to the intake port of the cylinder unit 3a. The throttle body unit 4 includes an intake pipe, a funnel for intake and an injector, and is supported between the pair of first body frames 102 by the cylinder unit 3a.

The air cleaner 112 is supported above the cylinder unit 3a by the pair of first body frames 102. Part of the air cleaner 112 is positioned between the pair of first body frames 102. A discharge port of the air cleaner 112 is connected to the throttle body unit 4.

The fuel tank 113 is supported behind the air cleaner 112 by the pair of first body frames 102. At least part of the fuel tank 113 is positioned above the crank unit 3b. Further, part of the fuel tank 113 is positioned between the pair of first body frames 102.

The first coupling member 200 is provided between the pair of first body frames 102 to extend in the width direction W between the air cleaner 112 and the fuel tank 113. In this state, the first coupling member 200 is positioned above the throttle body unit 4.

Thus, the first coupling member 200 overlaps with the throttle body unit 4 in the plan view of the vehicle, and overlaps with the pair of first body frames 102 in the side view of the vehicle.

As described above, in the motorcycle 100 according to the present embodiment, the first coupling member 200 is arranged in the gap between the air cleaner 112 and the fuel tank 113. Therefore, the range SA of Figure 2 can be set relatively small as compared to a case in which the first coupling member 200 is arranged in front of the air cleaner 112 and a case in which the first coupling member 200 is arranged behind the fuel tank 113.

That is, the positions in the front-and-rear direction L of the pair of first body frames 102 coupled by the first coupling member 200 can be brought close to the position MP of Figure 2 while the gap between the air cleaner 112 and the fuel tank 113 is effectively utilized.

Therefore, the rigidity of the pair of first body frames 102 can be improved while the air cleaner 112, the throttle body unit 4, the fuel tank 113 and the first coupling member 200 are efficiently arranged between the pair of first body frames 102.

Further, as described above, the first coupling member 200 of the present example is provided above the throttle body unit 4. Therefore, at a time of maintenance of the throttle body unit 4, the first coupling member 200 can be removed from the pair of right and left first body frames 102. Thus, maintenance work is facilitated.

The fuel tank 113 of the present example has a front surface S1 directed forward. At least part of the front surface S1 includes an inclined surface that is inclined forward and upward. Further, the air cleaner 112 of the present example has a back surface S2 directed rearward. At least part of the back surface S2 includes an inclined surface that is inclined rearward and upward.

Thus, the gap through which the first coupling member 200 passes can be formed between the fuel tank 113 and the air cleaner 112 while the front surface S1 of the fuel tank 113 and the back surface S2 of the air cleaner 112 are in a close proximity to each other. Therefore, the air cleaner 112, the fuel tank 113 and the first coupling member 200 can be compactly arranged between the pair of right and left first body frames 102.

### (4) Attaching Structure of each Constituent Element to Pair of First Body Frames

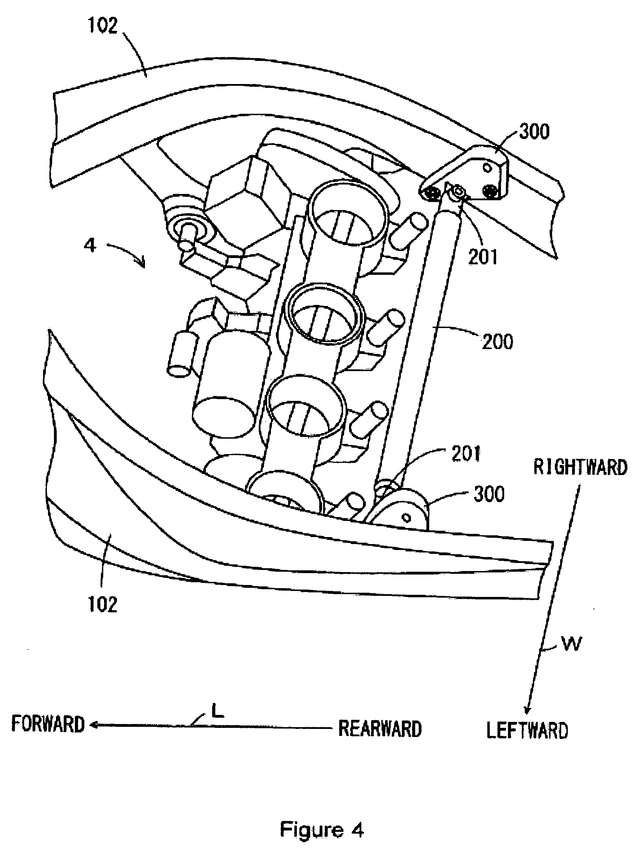

Figures 4 to 6 are diagrams showing the attaching steps of the first coupling member 200, the air cleaner 112 and the fuel tank 113 to the pair of first body frames 102. In the steps of Figure 4 to 6, the first coupling member 200, the air cleaner 112 and the fuel tank 113 are sequentially attached to the pair of first body frames 102. In Figures 4 to 6, the engine 3 of Figure 1 is not shown.

As shown in Figure 4, the throttle body unit 4 supported by the engine 3 (not shown) is arranged between the pair of first body frames 102. At the time of attaching of the first coupling member 200 to the pair of first body frames 102, the pair of tank brackets 300 is first attached to opposing portions of the pair of first body frames 102.

Further, the pair of couplers 201 at both ends of the first coupling member 200 is connected to the pair of tank brackets 300, respectively. In this manner, the first coupling member 200 is arranged above the throttle body unit 4.

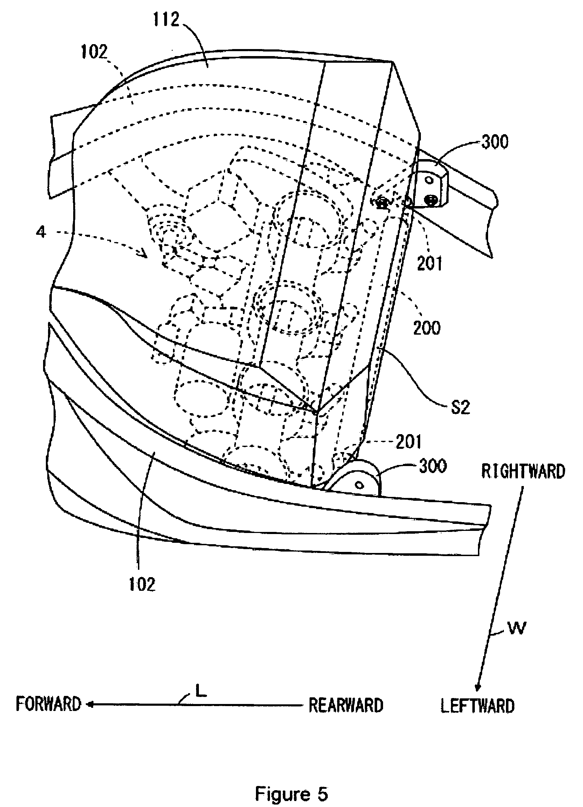

Subsequently, as shown in Figure 5, the air cleaner 112 is attached to the pair of first body frames 102 to cover the throttle body unit 4 from above.

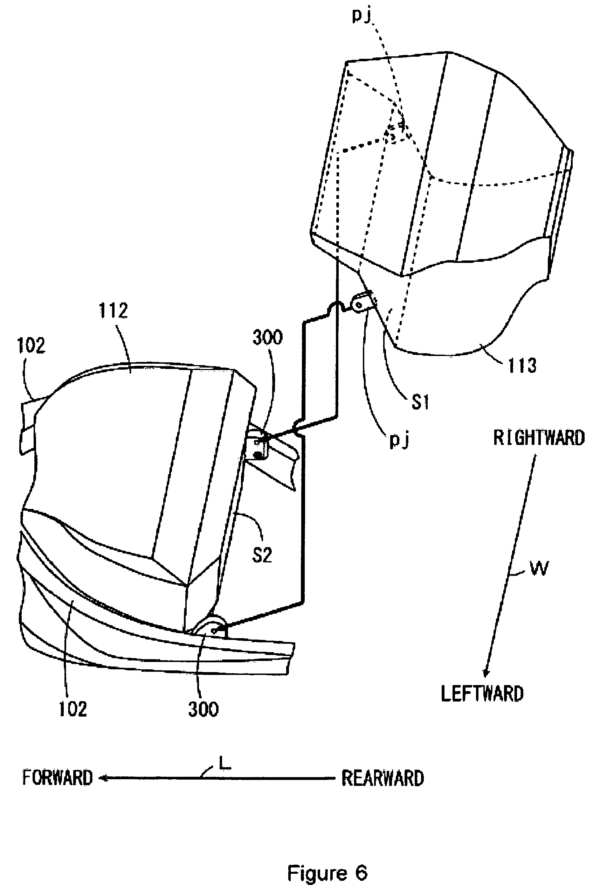

As shown in Figure 6, a pair of projections pj projecting forward is provided at both ends in the width direction W of the front surface S1 of the fuel tank 113. With the air cleaner 112 being attached to the pair of first body frames 102, the pair of projections pj of the fuel tank 113 is connected to the pair of tank brackets 300, respectively.

The first coupling member 200, the air cleaner 112 and the fuel tank 113 are attached to the pair of right and left first body frames 102 by the above-mentioned procedure. On the other hand, at the time of maintenance of the throttle body unit 4, a maintenance worker removes the fuel tank 113, the air cleaner 112 and the first coupling member 200 from the pair of first body frames 102 by the procedure opposite to the above-mentioned procedure.

### (5) Tank Brackets

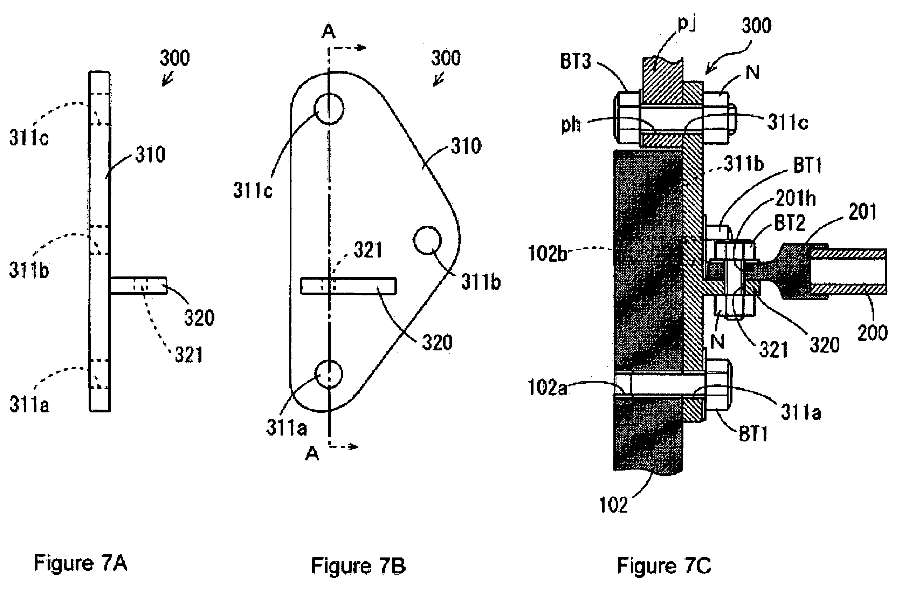

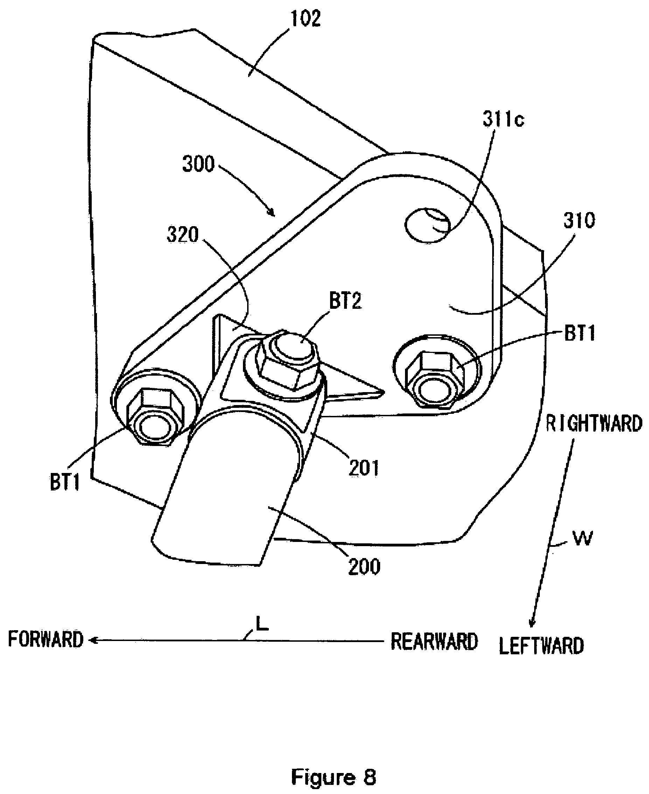

Details of the configuration of the tank brackets 300 will be described. Figures 7A to 7C are a front view, a side view and a cross-sectional view of the one tank bracket 300, and Figure 8 is an enlarged perspective view of the tank bracket 300 of Figure 4.

A front view of the right tank bracket 300 is shown in Figure 7A and a side view of the right tank bracket 300 is shown in Figure 7B. A longitudinal cross-sectional view of the right tank bracket 300 attached to the right first body frame 102 is shown in Figure 7C. A cross-sectional view of the tank bracket 300 in Figure 7C is equivalent to a cross-sectional view of the tank bracket 300 taken along the line A-A of Figure 7B.

As shown in Figures 7A and 7B, the tank bracket 300 of the present example has a bracket body 310 and a coupling member supporter 320. The bracket body 310 is a metallic flat-plate member having a substantially triangle shape. Three through-holes 311 a, 311 b, 311 c are formed in the bracket body 310 to be spaced apart from one another.

The coupling member supporter 320 is a metallic flat-plate member smaller than the bracket body 310. The coupling member supporter 320 is attached to the bracket body 310 by welding to project from one surface of the bracket body 310. A through-hole 321 is formed in the coupling member supporter 320.

As shown in Figure 7C, two through holes 102a, 102b corresponding to the through-holes 311 a, 311 b of the bracket body 310 of the tank bracket 300 are formed in the one first body frame 102. Threads are formed on the inner peripheral surfaces of the two through-holes 102a, 102b. The tank bracket 300 is positioned such that the through-holes 102a, 102b of the first body frame 102 and the two through-holes 311 a, 311 b of the bracket body 310 overlap with each other, respectively.

In this state, a bolt BT1 is attached to the one through-hole 102a of the first body frame 102 through the through-hole 311a of the tank bracket 300. Further, a bolt BT1 is attached to the other through-hole 102b of the first body frame 102 through the through-hole 311 b of the tank bracket 300. Thus, the tank bracket 300 is fixed to the first body frame 102.

A through-hole 201 h corresponding to the through-hole 321 of the coupling member supporter 320 of the tank bracket 300 is formed in each of the couplers 201 at the both ends of the first coupling member 200. The coupler 201 is positioned such that the through-hole 201 h of the coupler 201 and the through-hole 321 of the coupling member supporter 320 overlap with each other. In this state, a bolt BT2 is inserted into the through-hole 201 h of the coupler 201 and the through-hole 321 of the coupling member supporter 320, and a nut N is attached to the bolt BT2. Thus, as shown in Figure 8, the first coupling member 200 is fixed to the first body frame 102.

As shown in Figure 7C, a through-hole ph corresponding to the through-hole 311 c of the bracket body 310 of the tank bracket 300 is formed in each projection pj of the fuel tank 113. The fuel tank 113 is positioned such that the through-hole ph of each projection pj of the fuel tank 113 and the through-hole 311c of each bracket body 310 overlap with each other. In this state, a bolt BT3 is inserted into the through-hole ph of the projection pj and the through-hole 311 c of each bracket body 310, and a nut N is attached to the bolt BT3. Thus, the fuel tank 113 is fixed to the first body frames 102 by the tank brackets 300.

In the right tank bracket 300 of the pair of tank brackets 300 as described above, the coupling member supporter 320 is mounted on one surface of the bracket body 310 to project from the one surface of the bracket body 310. On the other hand, the left tank bracket 300 has the same configuration as the right tank bracket 300 except that the coupling member supporter 320 is attached on the other surface of the bracket body 310 to project from the other surface of the bracket body 310.

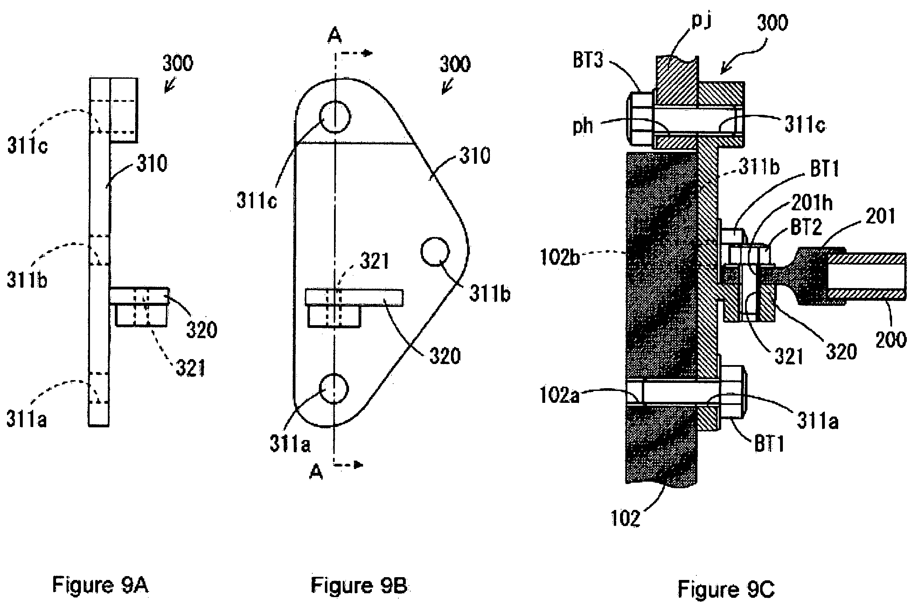

In the present embodiment, a tank bracket 300, described below, can be used instead of the tank bracket 300 of Figures 7A to 7C. Figures 9A to 9C are diagrams showing another example of the configuration of the tank bracket 300. Similarly to the examples of Figures 7A, 7B, 7C, a front view of the right tank bracket 300 is shown in Figure 9A, a side view of the right tank bracket 300 is shown in Figure 9B and a longitudinal cross-sectional view of the right tank bracket 300 attached to the right first body frame 102 is shown in Figure 9C. The tank bracket 300 of Figures 9A to 9C is different from the tank bracket 300 of Figures 7A to 7C in the following points.

As shown in Figures 9A and 9B, a portion of a coupling member supporter 320 in the vicinity of the through hole 321 has a thickness larger than the thickness of other portions, and a thread is formed on an inner peripheral surface of the through hole 321, in the present example. Further, a portion of a bracket body 310 in the vicinity of the through hole 311c has a thickness larger than the thickness of other portions, and a thread is formed on the inner peripheral surface of the through hole 311 c.

In this case, as shown in Figure 9C, the bolt BT2 can be attached to the through hole 321 of the coupling member supporter 320 through the through hole 201 h of the coupler 201 of the first coupling member 200. Further, the bolt BT3 can be attached to the through hole 311c of the bracket body 310 through the through hole ph of the projection pj of the fuel tank 113. Thus, the nuts N of Figure 7C become unnecessary, and the number of components is decreased.

### (6) Effects

As described above, the pair of right and left first body frames 102 is coupled by the first coupling member 200 that extends in the width direction W above the throttle body unit 4 and between the air cleaner 112 and the fuel tank 113. Thus, it is possible to improve the rigidity of the pair of first body frames 102 without increasing the thickness of the pair of first body frames 102.

Further, in the above-mentioned configuration, because the first coupling member 200 is positioned between the air cleaner 112 and the fuel tank 113, and between the pair of first body frames 102, the gap between the air cleaner 112 and the fuel tank 113 is effectively utilized. Therefore, the air cleaner 112, the throttle body unit 4, the fuel tank 113 and the first coupling member 200 are efficiently arranged between the pair of first body frames 102.

As a result, the rigidity of the pair of first body frames 102 can be improved while the size of the vehicle is not increased and an increase in weight is minimised or substantially inhibited.

Further, the first coupling member 200 is configured to be attachable to and detachable from a position above the throttle body unit 4. In this case, the first coupling member 200 can be removed from the pair of first body frames 102 at a time of maintenance of the throttle body unit 4. Therefore, maintenance of the throttle body unit 4 is prevented or inhibited from becoming complicated.

In the present embodiment, the pair of tank brackets 300 for attaching the fuel tank 113 to the pair of first body frames 102 is used as members for attaching the first coupling member 200 to the pair of first body frames 102. Therefore, an increase in the number of components is inhibited.

### (7) Other Embodiments

(7-1) While the pair of first body frames 102 and the pair of second body frames 103 are connected to each other by welding in the above-mentioned embodiment, the invention is not limited to such. The left first body frame 102 and the left second body frame 103 may be fabricated by integral molding instead of the connection between the left first body frame 102 and the left second body frame 103 by welding. Similarly, the right first body frame 102 and the right second body frame 103 may be fabricated by integral molding instead of the connection between the right first body frame 102 and the right second body frame 103 by welding. In this case, the number of steps for the fabrication of the body frame 1X is decreased.
(7-2) While at least part of the front surface S1 of the fuel tank 113 includes the inclined surface that is inclined forward and upward in the above-mentioned embodiment, the invention is not limited to such. The front surface S1 of the fuel tank 113 does not have to have the inclined surface that is inclined forward and upward. In this case, capacity of the fuel tank 113 can be increased.
(7-3) While at least part of the back surface S2 of the air cleaner 112 includes the inclined surface that is inclined forward and upward in the above-mentioned embodiment, the invention is not limited to such. The back surface S2 of the air cleaner 112 does not need to have the inclined surface that is inclined forward and upward. In this case, capacity of the air cleaner 112 can be increased.
   When the inclined surface is not present in the front surface S1 of the fuel tank 113 or the back surface S2 of the air cleaner 112, the measurement of the first coupling member 200 in the front-and-rear direction L is preferably decreased. Thus, the first coupling member 200 can be arranged in the gap between the fuel tank 113 and the air cleaner 112 while the fuel tank 113 and the air cleaner 112 are in a close proximity to each other.
(7-4) While the second coupling member 210 and the third coupling member 220 are connected to the pair of second body frames 103 by welding in the above-mentioned embodiment, the invention is not limited to such. The second coupling member 210 and the third coupling member 220 may be configured to be attachable to and detachable from the pair of second body frames 103 instead of being fixed to the pair of second vehicle frames 103 by welding. Thus, maintenance of the constituent elements supported by the pair of second body frames 103 becomes easier.
(7-5) While the first coupling member 200 is a metallic tubular member having a circular cross-section in the above-mentioned embodiment, the invention is not limited to this. The first coupling member 200 may be a tubular member having an elliptical cross-section or a rectangular cross section, a strip-shaped flat-plate member, or a bar-shaped member having an L-shape cross-section or a T-shape cross section.
(7-6) While the first coupling member 200 is configured to be attachable to and detachable from the pair of first body frames 102 by the pair of couplers 201 and the pair of tank brackets 300 in the above-mentioned embodiment, the invention is not limited to such. Connection portions for connection to the pair of first body frames 102 may be formed at the both ends of the first coupling member 200. In this case, the pair of couplers 201 and the pair of tank brackets 300 become unnecessary. Therefore, the number of components is decreased and an increase in weight is inhibited.
(7-7) While the first coupling member 200 is attached to the pair of first body frames 102 by the pair of tank brackets 300 in the above-mentioned embodiment, the invention is not limited to such. A member for attaching the first coupling member 200 to the pair of first body frames 102 may be fabricated separately from the tank bracket 300. In this case, members for attaching the fuel tank 113 to the pair of first body frames 102 and members for attaching the first coupling member 200 to the pair of first body frames 102 are not commonly used.
   Therefore, a support position of the fuel tank 113 at the pair of first body frames 102 and an attachment position of the first coupling member 200 at the pair of first body frames 102 can be individually set. Therefore, design flexibility is improved.
(7-8) While the duct 8 leading air to the air cleaner 112 is attached to the intake guide 110 to pass rearward the center of the motorcycle 100 in the width direction W in the above-mentioned embodiment, the invention is not limited to such. The duct 8 may be configured to pass rearward outside of the front fork FF in the width direction W to be connected to the air cleaner 112 from the outside of the pair of first body frames 102.
(7-9) While the pair of handles 30 separated from each other is attached to the front fork FF in the above-mentioned embodiment, the invention is not limited to the above-mentioned example. The pair of handles 30 may be integrally formed of one tubular member.
(7-10) While the above-mentioned embodiment is an example in which the
   present invention is applied to the motorcycle, the invention is not limited to such. The present invention may be applied to another straddle-type vehicle or saddle-straddling type motor vehicle such as a motor tricycle, an All-Terrain Vehicle (ATV) or the like.

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a straddle-type vehicle or saddle-straddling type motor vehicle, the head pipe 101 is an example of a head pipe, the pair of first body frames 102 is an example of a pair of right and left first body frames and the pair of second body frames 103 is an example of a pair of right and left second body frames.

Further, the cylinder unit 3a is an example of a cylinder unit, the crank unit 3b is an example of a crank unit, the engine 3 is an example of an engine, the air cleaner 112 is an example of an air cleaner, the throttle body unit 4 is an example of a throttle body unit and the fuel tank 113 is an example of a fuel tank.

Further, the first coupling member 200 is an example of a first coupling member, the pair of tank brackets 300 is an example of a pair of fuel tank brackets, the front surface S1 of the fuel tank 113 is an example of a front surface of a fuel tank, the inclined surface that is included in at least part of the front surface S1 is an example of a first inclined surface, the back surface S2 of the air cleaner 112 is an example of a back surface of an air cleaner and an inclined surface that is included in at least part of the back surface S2 is an example of a second inclined surface.

Further, the second coupling member 210 is an example of a second coupling member, and the third coupling member 220 is an example of a third coupling member.

As each of the constituent elements recited in the claims, various other elements having configurations or functions described in the claims can be also used.

The present invention can be effectively utilized for various saddle-straddling type motor vehicles having frames, respectively.

It will be appreciated that the embodiments of the invention hereinbefore described are given by way of example only, and are not meant to be limiting to the scope of the invention.

It will be appreciated that the term straddle-type vehicle or motor vehicle used herein, and as used in the art is meant to include the following terms also used in the art: saddle-ride type vehicle or motor vehicle, saddle-straddling type vehicle or motor vehicle, and includes: motorcycles and motorbikes as well as motor tricycles and All Terrain Vehicles (ATV's).

## Claims

1. A straddle-type vehicle or saddle-straddling type motor vehicle comprising:
a head pipe(101);
a pair of left and right first body frames (102) that extend rearward from the head pipe;
a pair of left and right second body frames (103) that extends downward from rear ends of the pair of left and right first body frames;
an engine (3) comprising a cylinder unit (3a) and a crank unit (3b) provided at a lower portion of the cylinder unit, and which is supported by the pair of left and right first body frames and the pair of the left and right second body frames such that at least part of the crank unit is located at a position further rearward than the cylinder unit;
an air cleaner (112) supported by the pair of left and right first body frames such that at least part of the air cleaner is positioned between the pair of left and right first body frames above the cylinder unit;
a throttle body unit (4) arranged between the pair of left and right first body frames to connect the air cleaner to the cylinder unit;
a fuel tank (113) supported by the pair of left and right first body frames behind the air cleaner such that at least part of the fuel tank is positioned between the pair of left and right first body frames above the crank unit; and
a first coupling member (200) that overlaps with the pair of left and right first body frames in a side view of the vehicle; **characterized in that**:
the first coupling member (200) extends in a vehicle width direction above the throttle body unit and between the air cleaner and the fuel tank to overlap with the throttle body unit in a plan view of the vehicle, and
both ends of the first coupling member (200) are supported to be attachable to and detachable from the pair of left and right first body frames, respectively.

2. The straddle-type vehicle or saddle-straddling type motor vehicle according to claim 1, further comprising a pair of fuel tank brackets that support the fuel tank at the pair of left and right first body frames, wherein
the first coupling member is supported to be mounted on and/or detachably attachable to the pair of fuel tank brackets.

3. The straddle-type vehicle or saddle-straddling type motor vehicle according to claim 1 or 2, wherein
the fuel tank has a front surface (S1),
at least part of the front surface of the fuel tank includes a first inclined surface that is inclined forward and upward, and
the first inclined surface is arranged behind the first coupling member.

4. The straddle-type vehicle or saddle-straddling type motor vehicle according to any one of claims 1 to 3, wherein
the air cleaner has a back surface (S2),
at least part of the back surface of the air cleaner includes a second inclined surface that is inclined rearward and upward, and
the second inclined surface is arranged in front of the first coupling member.

5. The straddle-type vehicle or saddle-straddling type motor vehicle according to any one of claims 1 to 4, further comprising:
a second coupling member (210) that extends in the vehicle width direction to connect upper portions of the pair of left and right second body frames to each other; and
a third coupling member (220) that extends in the vehicle width direction to connect lower portions of the pair of left and right second body frames to each other.

6. A saddle-type vehicle or saddle-straddling type motor vehicle as claimed in any of claims 1 to 5, wherein a distance between the pair of first body frames in a width direction (W) increases rearward from the head pipe, and the distance is maximum at a position (MP) in the front-and-rear direction (L), and the distance between the pair of first body frames in the width direction decreases from said position (MP).

7. A saddle-type vehicle or saddle-straddling type motor vehicle as claimed in claim 6, wherein the first coupling member is provided rearward of said position (MP) to connect opposing portions of the pair of first body frames.

8. A saddle-type vehicle or saddle-straddling type motor vehicle as claimed in any preceding claim, wherein the first coupling member is elongate and/or metallic and/or hollow and/or tubular and/or has a cross-section selected from one of: circular, elliptical, rectangular, flat, L-shaped or T-shaped.

9. A straddle-type vehicle or saddle-straddling type vehicle as claimed in any preceding claim, wherein a gap through which the first coupling member passes is formed between the fuel tank and the air cleaner, a/the front surface (S1) of the fuel tank and a/the back surface (S2) of the air cleaner being proximal to one another.

## Patentansprüche

1. Fahrzeug mit Sattel oder Kraftfahrzeug mit reitsitzartigem Sitz, aufweisend:
ein Lenkkopfrohr (101);
ein Paar linker und rechter erster Fahrzeugrahmen (102), die sich rückwärtig vom Lenkkopfrohr erstrecken,
ein Paar linker und rechter zweiter Fahrzeugrahmen (103), die sich abwärts von den hinteren Enden vom Paar linker und rechter erster Fahrzeugrahmen erstrecken,
einen Motor (3), aufweisend eine Zylindereinheit (3a) und eine Kurbeleinheit (3b), die an einem unteren Teil der Zylindereinheit vorgesehen ist und die durch das Paar linker und rechter erster Fahrzeugrahmen und das Paar linker und rechter zweiter Fahrzeugrahmen derart unterstützt wird, dass mindestens ein Teil der Kurbeleinheit sich in einer Lage befindet, die weiter rückwärtig ist als die Zylindereinheit,
einen Luftfilter (112), der von dem Paar linker und rechter erster Fahrzeugrahmen derart unterstützt wird, dass mindestens ein Teil des Luftfilters zwischen dem Paar linker und rechter erster Fahrzeugrahmen über der Zylindereinheit positioniert ist,
eine Drosselklappeneinheit (4), die zwischen dem Paar linker und rechter erster Fahrzeugrahmen angeordnet ist, um den Luftfilter an die Zylindereinheit anzuschließen,
einen Kraftstoffbehälter (113), der von dem Paar linker und rechter erster Fahrzeugrahmen hinter dem Luftfilter derart unterstützt wird, dass mindestens ein Teil des Kraftstoffbehälters zwischen dem Paar linker und rechter erster Fahrzeugrahmen über der Kurbeleinheit positioniert ist, und
ein erstes Kupplungselement (200), das mit dem Paar linker und rechter erster Fahrzeugrahmen in einer Seitenansicht des Fahrzeugs überlappt, **dadurch gekennzeichnet, dass**:
das erste Kupplungselement (200) sich in einer Fahrzeugbreitenrichtung über der Drosselklappeneinheit und zwischen dem Luftfilter und dem Kraftstoffbehälter erstreckt, um mit der Drosselklappeneinheit in einer Draufsicht des Fahrzeugs zu überlappen, und
beide Enden des ersten Kupplungselements (200) unterstützt sind, um anschließbar an bzw. lösbar von dem Paar linker und rechter erster Fahrzeugrahmen zu sein.

2. Fahrzeug mit Sattel oder Kraftfahrzeug mit reitsitzartigem Sitz nach Anspruch 1, ferner aufweisend ein Paar Kraftstoffbehälterträger, die den Kraftstoffbehälter am Paar linker und rechter erster Fahrzeugrahmen abstützen, wobei
das erste Kupplungselement unterstützt wird, um am Paar Kraftstoffbehälterträger montiert zu werden und/oder lösbar befestigbar am Paar Kraftstoffbehälterträger zu sein.

3. Fahrzeug mit Sattel oder Kraftfahrzeug mit reitsitzartigem Sitz nach Anspruch 1 oder 2, wobei
der Kraftstoffbehälter eine Stirnfläche (S1) hat,
mindestens ein Teil der Stirnfläche des Kraftstoffbehälters eine erste geneigte Fläche umfasst, die vorwärts und aufwärts geneigt ist, und
die erste geneigte Fläche hinter dem ersten Kupplungselement angeordnet ist.

4. Fahrzeug mit Sattel oder Kraftfahrzeug mit reitsitzartigem Sitz nach einem der Ansprüche 1 bis 3, wobei
der Luftfilter einen Rückseite (S2) hat,
mindestens ein Teil der Rückseite des Luftfilters eine zweite geneigte Fläche umfasst, die rückwärts und aufwärts geneigt ist, und
die zweite geneigte Fläche vor dem ersten Kupplungselement angeordnet ist.

5. Fahrzeug mit Sattel oder Kraftfahrzeug mit reitsitzartigem Sitz nach einem der Ansprüche 1 bis 4, ferner aufweisend:
ein zweites Kupplungselement (210), das sich in der Fahrzeugbreitenrichtung erstreckt, um obere Abschnitte des Paares linker und rechter zweiter Fahrzeugrahmen miteinander zu verbinden, und
ein drittes Kupplungselement (220), das sich in der Fahrzeugbreitenrichtung erstreckt, um untere Abschnitte des Paares linker und rechter zweiter Fahrzeugrahmen miteinander zu verbinden.

6. Fahrzeug mit Sattel oder Kraftfahrzeug mit reitsitzartigem Sitz nach einem der Ansprüche 1 bis 5, wobei ein Abstand zwischen dem Paar linker und rechter erster Fahrzeugrahmen in einer Breitenrichtung (W) rückwärtig vom Lenkkopfrohr ansteigt, und der Abstand an einer Position (MP) in der vorder- und rückseitigen Richtung (L) maximal ist, und der Abstand zwischen dem Paar erster Fahrzeugrahmen von dieser Position (MP) in der Breitenrichtung abnimmt.

7. Fahrzeug mit Sattel oder Kraftfahrzeug mit reitsitzartigem Sitz nach Anspruch 6, wobei das erste Kupplungselement rückwärtig von dieser Position (MP) vorgesehen ist, um gegenüberliegende Abschnitte des Paares erster Fahrzeugrahmen zu verbinden.

8. Fahrzeug mit Sattel oder Kraftfahrzeug mit reitsitzartigem Sitz nach einem der vorhergehenden Ansprüche, wobei das erste Kupplungselement verlängert und/oder metallisch und/oder hohl und/oder rohrförmig ist und/oder einen Querschnitt hat, der von einem der Folgenden ausgewählt ist: kreisförmig, ellipsenförmig, rechteckig, flach, L-förmig oder T-förmig.

9. Fahrzeug mit Sattel oder Kraftfahrzeug mit reitsitzartigem Sitz nach einem der vorhergehenden Ansprüche, wobei ein vom ersten Kupplungselement durchlaufener Spalt zwischen dem Kraftstoffbehälter und dem Luftfilter gebildet wird, wobei eine/die Stirnfläche (S1) des Kraftstoffbehälters und eine/die Rückseite (S2) des Luftfilters nah zu einander sind.

## Revendications

1. Véhicule du type à enfourcher ou véhicule à moteur du type à enfourcher à selle, comprenant :
un tube de tête (101) ;
une paire de premiers cadres de châssis de gauche et de droite (103), s'étendant vers l'arrière à partir du tube de tête ;
une paire de deuxièmes cadres de châssis de gauche et de droite (103), s'étendant vers le bas à partir des extrémités arrière de la paire de premiers cadres de châssis de gauche et de droite ;
un moteur (3) comprenant une unité de cylindre (3a) et une unité de carter de moteur (3b) agencée au niveau d'une partie inférieure de l'unité de cylindre, et supportée par la paire de premiers cadres de châssis de gauche et de droite et la paire de deuxièmes cadres de châssis de gauche et de droite, de sorte qu'au moins une partie de l'unité de carter de moteur est agencée au niveau d'une position située plus vers l'arrière que l'unité de cylindre ;
un filtre à air (112), supporté par la paire de premiers cadres de châssis de gauche et de droite, de sorte qu'au moins une partie du filtre à air est positionnée entre la paire de premiers cadres de châssis de gauche et de droite, au-dessus de l'unité de cylindre ;
une unité de corps de papillon (4) agencée entre la paire de premiers cadres de châssis de gauche et de droite afin de connecter le filtre à air à l'unité de cylindre ;
un réservoir de carburant (113) supporté par la paire de premiers cadres de châssis de gauche et de droite derrière le filtre à air, de sorte qu'au moins une partie du réservoir de carburant est positionnée entre la paire de premiers cadres de châssis de gauche et de droite au-dessus de l'unité de carter de moteur ; et
un premier élément d'accouplement (200) chevauchant la paire de premiers cadres de châssis de gauche et de droite dans une vue latérale du véhicule, **caractérisé en ce que** :
le premier élément d'accouplement (200) s'étend dans une direction de la largeur du véhicule au-dessus du corps de papillon et entre le filtre à air et le réservoir de carburant, pour chevaucher l'unité de corps de papillon des gaz dans une vue en plan du véhicule ; et
les deux extrémités du premier élément d'accouplement (200) sont supportées de sorte à pouvoir respectivement être fixées sur la paire de premiers cadres de châssis de gauche et de droite et détachées de ceux-ci.

2. Véhicule du type à enfourcher ou véhicule à moteur du type à enfourcher à selle selon la revendication 1, comprenant en outre une paire de supports du réservoir de carburant, supportant le réservoir de carburant au niveau de la paire de premiers cadres de châssis de gauche et de droite ; dans lequel :
le premier élément d'accouplement est supporté de sorte à être monté sur la paire de supports du réservoir de carburant et/ou à être détaché de ceux-ci.

3. Véhicule du type à enfourcher ou véhicule à moteur du type à enfourcher à selle selon les revendications 1 ou 2, dans lequel :
le réservoir de carburant comporte une surface avant (51) ;
au moins une partie de la surface avant du réservoir de carburant englobe une première surface inclinée, inclinée vers l'avant et vers le haut ; et
la première surface inclinée est agencée derrière le premier élément d'accouplement.

4. Véhicule du type à enfourcher ou véhicule à moteur du type à enfourcher à selle selon l'une quelconque des revendications 1 à 3, dans lequel :
le filtre à air comporte une surface arrière (S2) ;
au moins une partie de la surface arrière du filtre à air englobe une deuxième surface inclinée, inclinée vers l'arrière et vers le haut ; et
la deuxième surface inclinée est agencée devant le premier élément d'accouplement.

5. Véhicule du type à enfourcher ou véhicule à moteur du type à enfourcher à selle selon l'une quelconque des revendications 1 à 4, comprenant en outre :
un deuxième élément d'accouplement (210), s'étendant dans la direction de la largeur du véhicule pour connecter les parties supérieures de la paire de deuxièmes cadres de châssis de gauche et de droite l'une à l'autre ; et
un troisième élément d'accouplement (220), s'étendant dans la direction de la largeur du véhicule pour connecter les parties inférieures de la paire de deuxièmes cadres de châssis de gauche et de droite l'une à l'autre.

6. Véhicule du type à enfourcher ou véhicule à moteur du type à enfourcher à selle selon l'une quelconque de revendications 1 à 5, dans lequel une distance entre la paire de premiers cadres de châssis, dans une direction de la largeur (W), est accrue vers l'arrière du tube de tête, la distance étant maximale au niveau d'une position (MP) dans la direction allant de l'avant vers l'arrière (L), et la distance entre la paire de premiers cadres de châssis, dans la direction de la largeur, étant décroissante à partir de ladite position (MP).

7. Véhicule du type à enfourcher ou véhicule à moteur du type à enfourcher à selle selon la revendication 6, dans lequel le premier élément d'accouplement est agencé vers l'arrière de ladite position (MP) pour connecter des parties opposées de la paire de premiers cadres de châssis.

8. Véhicule du type à enfourcher ou véhicule à moteur du type à enfourcher à selle selon l'une quelconque des revendications précédentes, dans lequel le premier élément d'accouplement est allongé et/ou métallique, et/ou creux, et/ou tubulaire, et/ou a une section transversale sélectionnée parmi une section transversale circulaire, elliptique, rectangulaire, plate, en forme de L ou en forme de T.

9. Véhicule du type à enfourcher ou véhicule à moteur du type à enfourcher à selle selon l'une quelconque des revendications précédentes, dans lequel un espace à travers lequel passe le premier élément d'accouplement est formé entre le réservoir de carburant et le filtre à air, une/la surface avant (S1) du réservoir de carburant et une/la surface arrière (S2) du filtre à air étant proximales l'une par rapport à l'autre.
